# EUROPEAN PATENT APPLICATION

(11) **EP 4 312 012 A1**
(43) Date of publication of application: **31.01.2024**
(21) Application number: 22187718.6
(22) Date of filing: 29.07.2022
(51) Int. Cl.: G01M 5/00, G01M 11/08

(54) **APPARATUS AND METHOD FOR MONITORING AN OBJECT**

(71) Applicant: Hitachi, Ltd., Tokyo 100-8280 (JP)
(72) Inventor: YAMASHITA, Tomoaki, London, EC2Y 5AJ (GB); KATO, Tetsuji, London, EC2Y 5AJ (GB)
(74) Representative: MERH-IP Matias Erny Reichl Hoffmann Patentanwälte PartG mbB

(57) **Abstract**

An apparatus for monitoring an object, comprising an imaging unit 10 configured to image an object 100 to be monitored and to output a sequence of images, an image analysis unit 20 configured to determine values of parameters from the sequence of images, and a model analysis unit 30 configured to receive the determined values of the parameters and to determine a status of the object 100.

## Description

The present subject matter relates to an apparatus with which an object, preferably an infrastructure-related object, such as a bridge, a rail, a railroad switch (points) or parts thereof, and the like or mechanical parts of machines, can be monitored and with which the status of the object can be determined. It is technically advantageous that the monitoring does not require the installation of a plurality of hardware sensors or the like. Preferably, the remaining life time can be estimated by the described apparatus, too. Further, a method for monitoring an object as well as a computer-program product are described.

The monitoring of the status of an object or asset and the estimation of the remaining life time thereof is used, e.g., in the context of maintenance, repair and replacement scheduling which is important, especially in technical fields where an undetected deterioration an object can lead to severe and dangerous problems. Such objects may include bridges, rails of railways, switches of railroads, and comparable assets/objects.

EP 3 951 344 A1 describes the monitoring of an asset, such as a bridge, by a system of hardware sensors which measure the strain at different points of the bridge where they are installed. The measured values are used to determine the status of the bridge.

However, installing a complex system of a plurality of hardware parts, including sensors, wires, and the like, increases the complexity of the entire monitoring system, reduces the flexibility, limits application scenarios, and increases system costs.

It is a technical problem underlying the present disclosure to provide at least an apparatus for monitoring an object which overcomes the above limitations. This is solved by the subject-matter as set forth by the appended claims.

According to an aspect, an apparatus for monitoring an object is described which includes an imaging unit configured to image an object to be monitored and to output a sequence of images. The imaging unit may be a camera or any other comparable device for taking images or videos, wherein the imaging unit takes digital images or videos and processes the digital images/frames electronically. Preferably, the imaging unit either acquires sequences of images by taking a plurality of images within a predefined period of time, preferably a series of photos is taken, e.g. every second or less, within a short period of time, e.g. a few seconds or minutes, and/or the imaging unit takes videos of the object (object to be monitored or monitored object). In the latter case, the images are frames taken from the video. Preferably, a video or photos/images are only taken during predefined time intervals to reduce operational costs.

Further, the apparatus includes an image analysis unit configured to determine values of predefined movement-related physical parameters (briefly: physical parameters) at one or more points of the object from the sequence of images/frames, which have been received from the imaging unit. The physical parameters are preferably related to a movement of a point of the object. The term "point" of the object shall preferably indicate a pre-set position, coordinate(s), an area, a location, a feature or the like of the object which is monitored. Further, the term "point" does not necessarily need to be construed as one-dimensional and it may preferably indicate an area, a volume, a part or a component of the object.

In other words, the image analysis unit may be configured to determine the behaviour of the object by determining the behaviour of one or more points of the object. The analysis is carried out based on/with the images input from the imaging unit, and preferably, by comparing a plurality of the images taken in series (or frames extracted from the video), a movement behaviour of the one or more points can be extracted from the sequence of images, such as a displacement along an axis, a rotation around an axis, a velocity, i.e. the time derivative of the displacement, or an acceleration, i.e. the second time derivate of the displacement.

The output of the image analysis unit may thus be a value or a set of values (such as a vector or matrix) for each monitored point of the object for each physical parameter. In the least complex case, the output is a single displacement/velocity/acceleration value for each monitored point of the object, or for one or more selected points.

Further, the apparatus includes a model analysis unit configured to receive the determined values of the physical parameters and to determine a (health) status of the object based on the determined values of the physical parameters.

The determination of the health status may rely on different techniques or methods which may be implemented by a sub-unit by way of a software and/or hardware module/unit; and, for example, the methods may include comparing the values to pre-set thresholds or margins which may indicate, when the value(s) exceed or fall below the threshold(s) or leave the margin(s), an abnormal status. Further, the values may be compared to values of the initial state of the object and based on a deviation between the determined values and the initial values the status may be determined. Even further, the values may be compared to maximal allowable values or deviations and the status may be determined based on how close the actually determined value(s) are to the maximal/minimal allowable values or deviations.

Even further, the determination may also rely on a simulation into which respective sub-unit the determined values are input and a simulation result may be output delivering the status of the object. The simulation may be installed as a sub-software-unit which may simulate vibration modes, loads (such as strain) or the like based on the input values. The simulation unit may be a pre-set/preprogrammed and prestored simulation program including the details of the monitored object so that the actual status can be simulated simply by updating the actual values received for the physical parameters. The simulation may be based on modal analysis, finite elements, and the like. The term "simulation" here may also include analytic calculations which may preferably be based on pre-stored/preprogrammed simplified models of the object to be monitored, such as mechanical beam models and so on.

Further, statistical methods may be employed which are based on historic data of similar objects and the like which may also be implemented by way of software and/or hardware.

The exemplary methods/techniques described above may also be combined for determining the status of the object. For example, the comparison of values of a physical parameter, e.g. displacement, with a threshold of a maximum displacement may be combined with the comparison of the displacement value with historic data of a similar object or the threshold may be generated based on the historic data.

In other words, the determination of the status is achieved by using the values of the physical parameters as an input to a calculation and/or simulation which returns the status. The "status" shall be understood to reflect an assessment result about the "health" or condition or state of the monitored object. The status may indicate that the objected is in an "abnormal" or "normal" state. The status may also differentiate between different states, like "normal", "abnormal within allowable limits", "abnormal outside allowable limits". The status may also be indicated in even more detail, e.g., the "status is outside the normal range and at x % of the maximal/minimal allowable limit". Other status indications may also be included by the herein used term "status".

Each of the above described (sub-)units may be either software-based and/or hardware-based, where the apparatus may be a specifically designed hardware apparatus or a conventional computer which is connected, by wire and/or wireless, to the imaging unit. Each unit, if software-based, may be a dedicated software program stored on a storage space of the apparatus or, if hardware-based, a microchip or a comparable component which has internally encoded functionality for performing the above described tasks of each unit. The above described units may be separated units or they/some of them may be merged with each other.

As noted above, the technical benefits and advantages include the flexibility of use and the low complexity of the installation, e.g. because there is no need to install a system of a plurality of sensors at the object. The system's costs are also reduced because, essentially, a suitably configured computer and an imaging unit may already be sufficient for achieving reliable monitoring and status determination results. Therefore, the application scenarios are wide-ranging and even buildings or infrastructure objects which are difficult to equip with sensor systems or the like may be monitored. Summarizing a more flexible and less complex monitoring apparatus can be provided. Further it is noted that the number of examples of objects described herein is of course limited, however, the application scenarios are wide-ranging and the application examples described herein are merely an illustration of the working principle. For example, infrastructure applications are described herein mainly, however, parts of machines may be the object to be monitored, too. For example, a machine or a part thereof which is accessible in such a way that the imaging unit can take videos or images thereof may already be the only prerequisite for the monitoring by the herein-described apparatus/method.

According to a preferred option, the apparatus includes a life time estimation unit configured to estimate the remaining life time of the object based on the determined status.

The life time estimation unit may have access to an internal and/or external database which may store historic data for other monitored objects of the same or a similar type, and a comparison of the actual status of the monitored object with the historic data enables the life time estimation unit to estimate the remaining life time.

For example, the historic data may include maximum/end of life time data of similar or same-type objects and the status of these objects at their end of the life time. Comparing these historic data with the actual status data of the monitored object allows estimating the remaining life time. Accuracy can be further increased if a plurality of historic data is stored in the database so that a statistical evaluation can be used for the estimation of the remaining life time. This leads to an overall further improvement of the before described flexible and less complex monitoring apparatus.

In other words, the status may be determined by the model analysis unit and, based on said determined status and/or the values determined by the image analysis unit, the remaining life time may be determined by the life time estimation unit which preferably uses statistical methods for the determination. One simple example for the determination of the remaining life time may include that the model analysis unit determines, based on a comparison approach, that a displacement value of a monitored object is outside an allowable displacement margin at one (or more) monitored point(s). This may lead to the output of an "abnormal" status or the like. Further, the life time estimation unit may then use the specific displacement value or the deviation from the allowable margin and the data from the historic database to estimate the remaining life time based on statistics methods. E.g., the comparison with the historic data may return that similar objects having had the same or similar displacement values needed a repair, maintenance or replacement within a certain period of time, which may then be used as the "remaining life time" output. Analogously such determination approach can also be used when the model analysis unit uses other methods for determining the status of the monitored object. In other words, the model analysis unit determines a "behaviour" of the object and said behaviour and/or the values output by the image analysis unit are compared to data in a database so that a remaining life time can be estimated.

According to a preferred option, the image analysis unit is configured to analyse the sequence of images imaged by the imaging unit and to detect movements or displacements of one or more predefined points of the object within the sequence of images/frames. As discussed above, comparing the images/frames of the analysed sequence allows detecting a movement/displacement. Further, as discussed above, the (movement-related) physical parameters may include a displacement of a point of the object, a displacement velocity of the point of the object and/or an acceleration of the point of the object. Velocity and acceleration values may be determined based on time information which is provided by the imaging unit together with the images/frames, e.g. because the total length of the sequence and/or time differences between each image/frame are known. Absolute values of displacements/deflections are obtainable by known techniques of image processing especially when the distance between the imaging unit and the object to be monitored has been determined in advance and has been stored in a database of the apparatus. If needed, other relevant distances, measures or reference scales and so on may be pre-stored in the database, too.

Even further, acceleration values determined by the image analysis unit may be converted into strain values at the respective point of the object monitored using comparison, simulation and/or analytic methods. In view of the analytic method, for example, a further internal sub-unit of the apparatus may be configured to receive the determined values of the physical parameters, in this case displacement or acceleration values of one or more points of the object and, based on these values, the sub-unit may calculate the resulting strain. The strain calculation may be based on a simplified model of the object, e.g. in case of a bridge or a rail or a part of the rail the simplified model may be considered to be a beam, and using generally known mechanical relationships, e.g. between displacement/deflection or acceleration and strain. Further, the sub-unit may also be a finite element representation of the object and the strain may be simulated based on the values of the physical parameters as input. A comparison approach may rely on historic experimental/measured data stored in a database in which, e.g., the displacement values are related to strain values for similar/same other objects which have been measured and/or calculated before.

Strain values may preferably be determined by the same sub-units (which may be located in the image analysis unit or the model analysis unit) which also determine the status of the object for reducing the complexity of the apparatus. For example, in case the strain values are simulated from the values determined by the image analysis unit, the same simulation model may be used for determining the strain which is also used for the status determination. Further, the above described one or more sub-units for determining strain values or the like may also be combined with the sub-units of the model analysis model which determine the status of the object.

According to a preferred option, the image analysis unit is configured to analyse the sequence of images by motion magnification analysis. The technique of "motion magnification" is already known and can be used for detecting even subtle movements/displacements of objects or parts thereof. Therefore, using motion magnification, the accuracy and reliability of the herein described apparatus is further increased because even small movements may be detected correctly. The motion magnification may be combined with the known approach of determining absolute values for displacement, distance, etc. from a images where, if using motion magnification, the magnification factor is further taken into account for the determining of the absolute values.

According to a preferred option, the model analysis unit is configured to use either one of or a combination of status analysis models for determining the status of the object based on the physical parameter values determined for the points of the object monitored, which have been described above. The herein-described apparatus can be flexibly adapted to the object to be monitored and the complexity of the setup as well as the accuracy of the results can be set precisely. For example, in case an object shall be monitored which has a complex geometry and which could cause severe problems if a status determination would not be very accurate would possibly require that a very accurate simulation model is used for determining the status of the object, and, in case an object shall be monitored which has a rather simple geometry/shape and for which the determination of the status does not need to be extremely exact, the status may also be determined based on a comparison of single points or only one point with a threshold or the like. In other words, the herein-described apparatus can provide technical options for all technical monitoring scenarios and the complexity, accuracy and the level of detail of the monitoring can be tailored for each object with a high degree of flexibility by applying different status determination methods, by the number of points monitored, by the number and kind of physical values monitored/determined, etc. The adaption to a specific monitoring object may, e.g., be based on relatively less complex software adaptions of sub-units within the image analysis unit, the model analysis unit and/or the life time estimation unit.

According to a preferred option, the life time estimation unit is configured to compare the status of the object with an initial status or a lifetime-maximum status of the object stored in a database, and to estimate the remaining life time based on the comparison result which relies, preferably, on a statistical method.

According to a preferred option, the imaging unit is configured to start and/or end imaging based on a trigger signal. The trigger signal may be pre-set and dependent on the object to be monitored. For example, the trigger signal may be the detection of a movement of the object. Further, for example, if the monitored object is driven by a motor, e.g., the start of the motor operation may be used as a trigger signal or an electrical signal may be measured by a sensor and the rising/falling of electric current or voltage above/below a threshold may be a trigger signa l.

In other words, the trigger signal may be a detected movement of a point of the object or a threshold violation of a monitored signal including electrical current or electric voltage.

The triggered monitoring results in a reduction of image data and reduces the operation time of the imaging unit. Further, the complexity of the image analysis is reduced because only image sequences are analysed which include a monitoring-relevant event.

According to a preferred option, the imaging unit is configured to start and end imaging based on predefined conditions of the object. For example, if an electrical signal is monitored, e.g. the voltage or current of a motor driving the object, a constant state of the electric signal may be the predefined condition. The constant state, preferably, may be detected if the monitored signal does not change for a pre-set time period or if the time derivative(s) of the signal indicate a constant or approximately constant state, e.g. This is another measure for increasing the efficiency of the monitoring because, as noted above, only image sequences are processed which are relevant for the monitoring. Further, this option of analysing only specific image sequences increases the accuracy of the monitoring even further because, inter alia, irrelevant movements of the monitored objects are disregarded.

According to a further aspect, there is described a method for monitoring an object which comprises the steps of, at least: imaging an object to be monitored and outputting a sequence of images/frames; determining values of physical parameters at one or more points of the object from the sequence of images; and determining the status of the object based on the determined values of the physical parameters.

According to a further aspect, there is also provided a computer-program product which may carry out the method(s) as described herein.

Summarizing, the technical benefits and advantages include, at least, that the flexibility of the installation can be increased because there is no need to install a system of a plurality of sensors at the object. The system's costs are also reduced. The application scenarios are wide-ranging and even machines, buildings/infrastructure objects which are difficult to equip with sensor systems or the like may be monitored. The accuracy and complexity of the monitoring can be further increased by optional configurations as also described above, e.g. including the triggering of the image acquisition.

In the following the claimed subject matter will be further explained based on at least one preferential example with reference to the attached drawings, wherein:
- Figure 1: shows schematically an apparatus for monitoring an object as described herein;
- Figure 2: shows schematically an apparatus for monitoring an object as described herein, wherein the object is a part of a railroad switch;
- Figure 3: shows schematically a preferred option of the setting as shown by Figure 2;
- Figures 4a and 4b: show schematically options for the triggering of the imaging unit;
- Figure 5: shows a flow chart of steps of the method disclosed herein.

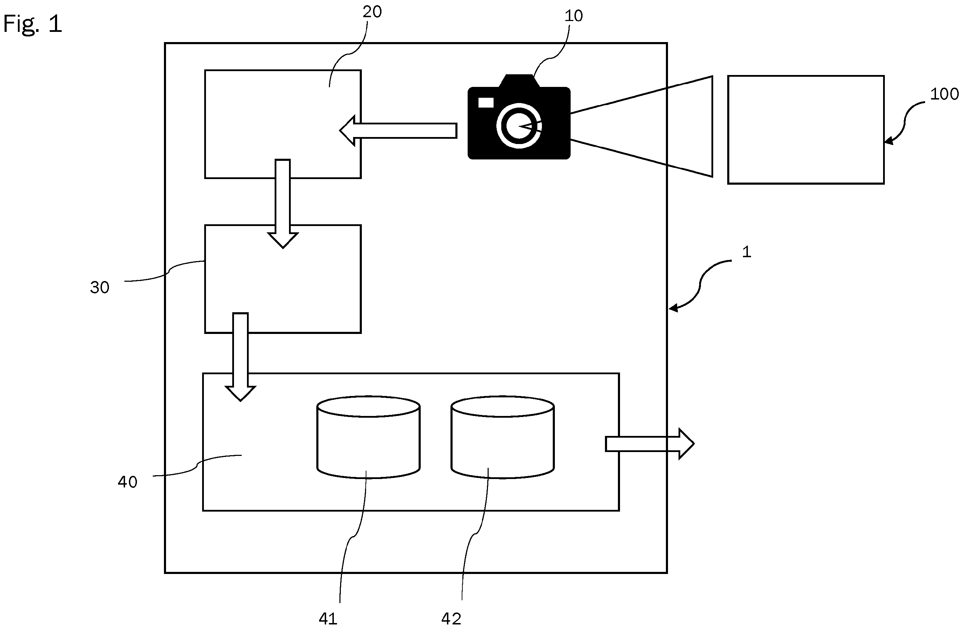

Figure 1 shows an apparatus 1 with which an object 100 is monitored. The object 100 may be an infrastructure object, such as a bridge, a rail or a switch of a railroad, and the like, or it may be a machine or part of a machine, especially a moving part such as a shaft, a wheel of a train or the like. The status of said object 100 is monitored by the apparatus 1.

The apparatus 1 includes an imaging unit 10 which takes images of the object 100 or of parts thereof. Alternatively the imaging unit 10 may also take videos and frames of the videos may be processed within the apparatus 1. Preferably, the imaging unit 10 takes sequences of images (or frames) which preferably include a plurality of images/frames taken in sequence during a linear time interval. Most preferably, the number of images/frames included in the sequence and the time duration of the sequence are predefined, measured or known by other measures.

Figure 1 shows the preferred flow of data within the apparatus 1 by way of bold arrows. The output data of the imaging unit 10 is provided, as input, into an image analysis unit 20. The image analysis unit 20 is configured to determine values of predefined physical parameters, which are preferably movement-related. Most preferably, the physical parameters are the displacement, the velocity, or the acceleration of a point or area of the object 100. Other physical parameters may also relate to strain, frequency or the like. The point or area of the object 100 may be pre-set and the apparatus 1 may be configured to monitor a single point or a plurality of points of an object 100 which may be configured flexibly based on the type of the object 100 or the monitoring task.

For example, if the object 100 has a rather simple geometry or shape and if the displacement (or the like) values of a single point thereof are expected to be sufficient for reliably determining the status of said object 100, the apparatus 1 may be programmed or configured by a user installing the apparatus 1 to monitor a single point. If the geometry or any other factor should however require that more than one point is monitored, the number of points and their coordinates may be input/pre-set by a user, too. The latter case could, e.g., be relevant if a bridge is monitored where monitoring a single point of the bridge may not return sufficient information for an accurate and reliable determination of its status.

In regard of setting the points and the number thereof, the apparatus 1 may include a graphical user interface unit (not shown by the Figures) which displays a graphical user interface and which enables the user to select and thus set points to be monitored. In order to do so, a sample image of the object 100 may be taken during the installation of the apparatus 1 and the user may then select interactively the points to be monitored on the sample image displayed by the graphical user interface. Other options may be available, too. During this installation procedure, the user can also input other information, e.g., the distance between the imaging unit 10 and object/point to be monitored and/or dimensions of the object to be monitored or distances between points to be monitored.

In a preferred option, the image analysis unit 20 may use the known technique of motion magnification and the known techniques of extracting distances from images for determining the (absolute) values of a displacement or other physical parameters from the image sequences. Preferably, one image sequence may return at least one (and preferably one) value of at least one physical parameter for each monitored point. This may mean that a displacement value for each monitored point of an object 100 is determined from one sequence of images, or, in other words, that the image analysis unit 20 may output a displacement value for each monitored point of an object 100 for a sequence of images analysed. Considering that the displacement values may vary over the sequence of images, especially in dynamic scenarios, the output displacement value determined by the image analysis unit 20 may be the maximum displacement value, a mean value or the like. The image analysis unit 20 includes not-shown sub-units/routines which enable it to perform the respective tasks, and preferably these sub-units are software-based.

Further, the apparatus 1 includes a model analysis unit 30 which receives the output of the image analysis unit 20 and which determines the status of the object 100 based on the determined values of the physical parameters. The model analysis unit 30 may include one or more sub-units (not shown) for performing this task. The sub-unit(s) may be configured to make use of statistical methods, comparisons and/or simulation to determine the status. Statistical methods may include, preferably, to evaluate the one or more determined physical parameter values in comparison to historic data (stored in a database not shown) so that a status may be determined. Comparative methods may include comparing the one or more physical parameter values with pre-set thresholds or margins of allowable values. For example, a displacement being larger than a threshold may return an "abnormal" or "critical" status or an acceleration of a monitored point being outside a pre-given margin may return the same status, and the like. Many other comparisons may be used or implemented, depending on the application scenario and its requirements. Further, simulation methods may be used. In this case, a simulation model may once be provided and stored and the simulation model may be updated with the actual physical parameter values for determining the actual status of the object 100. The latter would require more efforts and increase the complexity during the initial installation of the apparatus 1, however, may return very accurate status results, while comparisons and statistical methods may be set up more quickly and with less complexity.

Further, the apparatus 1 preferably also includes a life time estimation unit 40 which may include one or more databases 41, 42 or which may access these databases 41, 42 if provided remote to the apparatus 1. The first database 41 includes the status data received from the model analysis unit 30 and/or the values of the physical parameters determined by the image analysis unit 20. The second database 42 includes historical data which enable, by applying statistical methods or comparison, to qualify the data in the first database 41 based on the data in the second database 42 from which a remaining life time can be estimated. In other words, e.g., the status and/or physical parameter values in the first database 41 are preferably compared or otherwise statistically evaluated in view of the historic data in the second database 42 so that the remaining life time of the object 100 can be estimated. One example among other possible options may include that a certain displacement value of a point of an object 100 in the historic data of a comparable object(s) has been observed to indicate that the end of life of the object 100 is closer than a certain number of remaining use cycles or time. More concretely, e.g., if the displacement value is X, the historic data shows that by average or the like the remaining life time of said object 100 will be Y with X and Y being respective numerical values.

The status and/or the estimation of the remaining life time may then be the apparatus' output as indicated in Figure 1. The output may be displayed to the user via a graphical user interface. Further, the status may also be the input to another device or machine. For example, the output may trigger issuing a control command for ordering a maintenance action or the like. Further, in case the object 100 should be machine-controlled or a machine, e.g., a switch of a railroad, the status output of the apparatus 1 may also be feed into the control device (not shown) of said object 100 for adapting control routines. For example, the output of the apparatus 1 may be used to adapt the driving of the object 100 so as to extend the life time or the like.

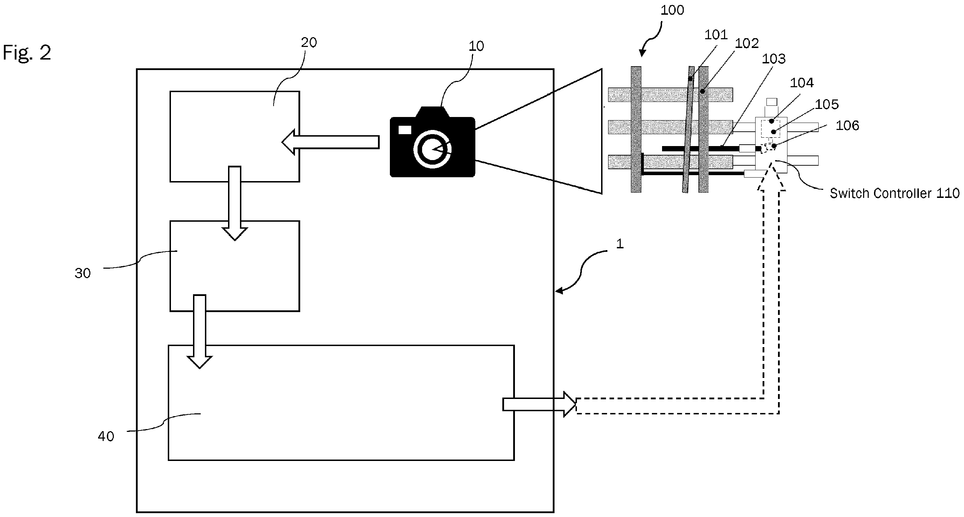

Figure 2 shows a specific example, where the object 100 is a railroad switch. The example of Figure 2 shall not limit the application scenarios and other objects 100 could be monitored, too. As one can see from the schematic arrangement of the units 10 to 40, the apparatus 1 has the same configuration as already described in connection with Figure 1. The object 100 is a railroad switch which has a tongue 101, a rail 102 a crank rod 103 for the tongue 101, a point machine 104 as well as a motor 105 and a gear 106 for moving the tongue 101. The operations of the switch are controlled by an external or internal switch controller 110.

In the present example of Figure 2, the imaging unit 10 is configured to monitor the movements of the tongue 101. For doing so, the imaging unit 10 is preferably arranged so as to take images or videos of the entire tongue 101 or more preferably only of a tip end part of the tongue 101. Then, in this example, a relatively less complex monitoring approach may include to simply detect the movements of the tongue and, e.g., the end positions of the tongue 101 in one or both rotational directions. If it is detected that the end positions include a displacement/deviation from a default end position, a comparison with allowable deviation values or the like may return a status, such as normal condition, abnormal condition, or the like. In other words, a monitoring point of the switch may be the tip end portion of the tongue 101 if the movements of the tongue shall be subject of the monitoring.

In a further example, a monitoring object could be, in addition or alternatively, the crank rod 103 or the rail 102 or a part of the rail 102 itself. For example, if the rail 102 is monitored, a load-induced displacement or bending of the rail 102 during a load situation (e.g. a train passing) may be monitored and a strain simulation may return the status of the rail whether it is close to its end of service or not.

In addition, Figure 2 includes, exemplarily, an optional feedback control for which output signals of the unit 40, as shown by a broken arrow are fed back into the controller 110 of the switch. For example, if the tongue 101 is monitored and if it should be detected that the movement range of the tongue 101 deviates from the default range, said detection result may be used to output control signals from the unit 40 to the switch controller 110 which lead to an adaption of the movement control of the tongue 101 so that the tongue movements return to the default movement range. For example, such a situation could occur due to use-induced wear which could be countered by adapting the movement control accordingly. Such control signals output by the apparatus 1 may be generated in the unit 40 or in a further not-shown sub-unit of the apparatus 1.

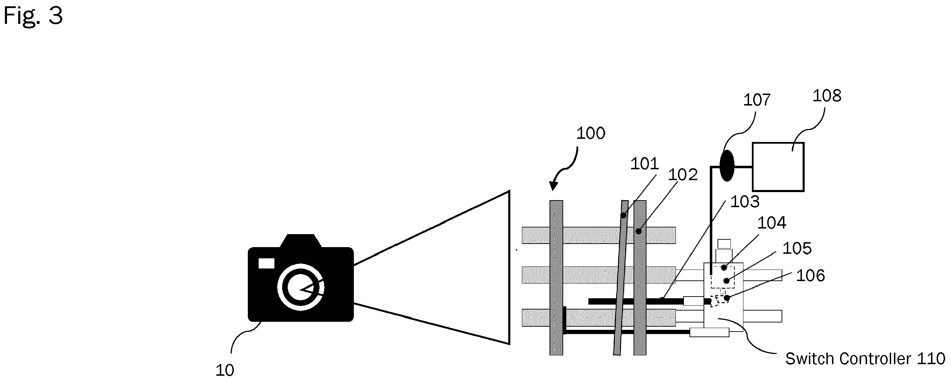

Figure 3 shows a further option for modifying the monitoring approach and for increasing the accuracy while reducing the complexity. Concretely, if the monitored object 100 includes a sensor unit, such as a current sensor 107 mounted between the inverter 108 and the motor 105 of the switch controller 110 in the example of Figure 3, the sensor signals may be also used to trigger the imaging unit 10. Other sensor units depending on the monitored object 100 may be used as well.

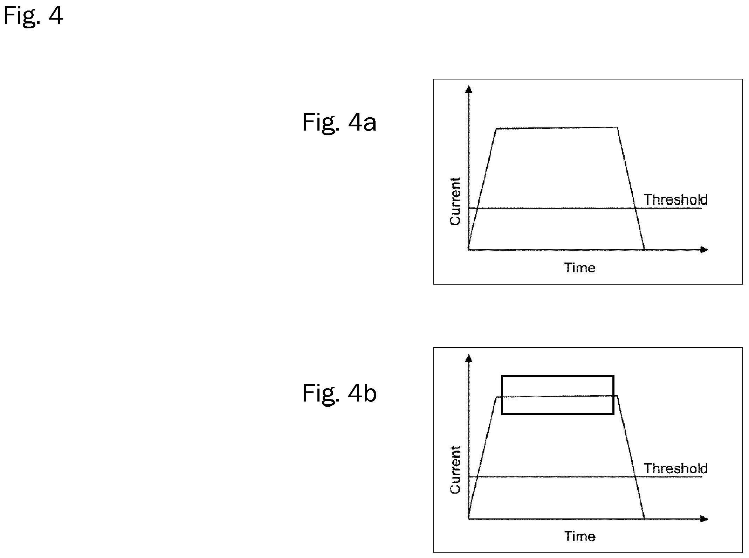

In the example of Figure 3 the trigger for starting and/or ending the acquisition of images/videos will be the level of the electric current detected by the current sensor 107. This is shown in Figure 4a. As soon as the electric current detected by the sensor 107 is above a pre-set threshold, the imaging unit acquires images / videos, e.g., when the movement behaviour of the tongue 101 (or other motor-actuated parts of the switch) shall be monitored. The sensor signals may be provided to the apparatus 1 by wired or wireless connections.

Thereby, the data volume which is processed by the apparatus 1 is reduced and only the relevant time periods of the operation of the switch (or any other monitored object 100) are used for the evaluation of the status which also increases the accuracy of the monitoring.

Furthermore, Figure 4b shows another optional modification according to which the imaging unit is only active during a pre-set signal period of a sensor signal. In the present example of Figure 3 this may be the electric current and the pre-set signal period may be defined to be the period during which the electric current is above a threshold and constant. This may further increase the accuracy of the monitoring because possible accidental movements or the like are excluded best from the monitoring. The pre-set period example in Figure 4b is shown by a rectangle around the constant level of the electric current. If no sensor signals are available, the example of Fig. 4b may also include predefined movements or the like of the object 100 itself.

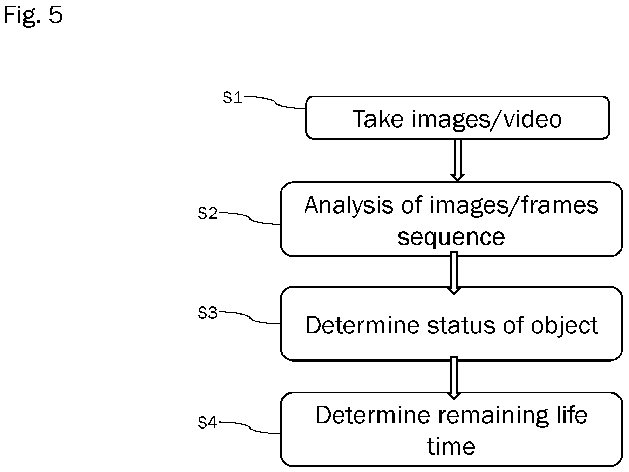

Figure 5 summarizes possible steps performed by the apparatus 1 during the monitoring. In a possible first step S1, the imaging unit 10 acquires the sequence(s) of images or a video and provides the respective data to the image analysis unit 20. The unit 20 performs, in a further step S2, an analysis of the images or frames by which pre-defined physical parameter values are determined, such as the displacement of one or more points of the monitored object 100, the velocity thereof, the strain or the like. The such determined values are then passed to a further unit 30 which is the model analysis unit 30. Said unit 30, step S3, determines the status of the object 100 using above described techniques, such as simulation, comparison, statistics, numerical methods and/or the like. Further, if the remaining life time shall also be determined, the data may be output to the life time estimation unit 40 which estimates, step S4, the remaining life time. Further, not shown in Figure 5, preferably the status and/or remaining life time data may also be used to generate feedback control data which could be output to the object 100 for adapting the control thereof.
Summarizing, the present disclosure enables a less complex and flexibly adaptable however accurate monitoring of objects 100 of very different types, preferably infrastructure objects or machines.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing. Aspects/Examples of the present disclosure may be a software entirely (including firmware, resident software, microcode, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context requires otherwise, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.
Those skilled in the art will appreciate that various adaptations, modifications, and/or combination of the just described aspects and examples can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different aspects or examples of the disclosure described herein may be combined to form other aspects or examples of the disclosure.

## Claims

**1.** An apparatus for monitoring an object (100), comprising
- an imaging unit (10) configured to image an object (100) to be monitored and to output a sequence of images;
- an image analysis unit (20) configured to determine values of physical parameters at one or more points of the object (100) from the sequence of images;
- a model analysis unit (30) configured to receive the determined values of the physical parameters and to determine a status of the object (100) based on the determined values.

**2.** The apparatus according to claim 1, further including a life time estimation unit (40) configured to estimate the remaining life time of the object (100) based on the determined status.

**3.** The apparatus according to at least one of the previous claims, wherein the image analysis unit (20) is configured to analyse the sequence of images imaged by the imaging unit (10) and to detect movements of one or more predefined points of the object (100).

**4.** The apparatus according to at least one of the previous claims, wherein the physical parameters include a displacement of a point of the object (100), a displacement velocity of the point of the object (100) and/or an acceleration of the point of the object (100).

**5.** The apparatus according to claim 4, wherein acceleration values determined by the image analysis unit (20) are converted into strain values for each point of the object (100).

**6.** The apparatus according to at least one of the previous claims, wherein the image analysis unit (20) is configured to analyse the sequence of images by motion magnification analysis, and/or by determination of absolute displacement values based on a pre-set distance between the imaging unit and each point of the objected monitored.

**7.** The apparatus according to at least one of the previous claims, wherein the model analysis unit (30) is configured to use either one of or a combination of status analysis methods for determining the status of the object (100) based on the physical parameter values determined for the points of the object (100).

**8.** The apparatus according to at least one of the previous claims, wherein the model analysis unit (30) is configured to use either one of or a combination of status analysis methods for determining the status of the object (100) based on the physical parameter values determined for the points of the object (100), wherein the status analysis methods include comparison, simulation and/or numerical methods.

**9.** The apparatus according to at least one of the previous claims, wherein the life time estimation unit is configured to compare the status of the object (100) with an initial status or a lifetime-maximum status of the object (100) stored in a database, and to estimate the remaining life time based on the comparison result.

**11.** The apparatus according to at least one of the previous claims, wherein the imaging unit (10) is configured to start and/or end imaging based on a trigger signal.

**12.** The apparatus according to claim 11, wherein the trigger signal is a detected movement of a point of the object (100) or a threshold violation of a monitored signal including an electrical current or an electrical voltage.

**13.** The apparatus according to at least one of the previous claims, wherein the imaging unit (10) is configured to start and end imaging based on a predefined condition of the object (100) or of monitored signal.

**14.** A method for monitoring an object which comprises the steps of:
- imaging an object (100) to be monitored and outputting a sequence of images;
- determining values of physical parameters at one or more points of the object (100) from the sequence of images;
- determining the status of the object (100) based on the determined values of the physical parameters.

**15.** A computer-program product configured to carry out the method of claim 14 when executed by a computer.
